# EUROPÄISCHE PATENTSCHRIFT

(11) **EP 4 252 525 B1**
(45) Veröffentlichungstag und Bekanntmachung des Hinweises auf die Patenterteilung: **21.08.2024**
(21) Anmeldenummer: 23163818.0
(22) Anmeldetag: 23.03.2023
(51) Int. Cl.: A01G 24/22, A01G 24/44, D04H 1/4266, E04D 11/00

(54) **SUBSTRATPLATTE FÜR EINE DACHBEGRÜNUNG SOWIE VERFAHREN ZUR DACHBEGRÜNUNG**
SUBSTRATE PLATE FOR GREENING A ROOF AND METHOD FOR GREENING A ROOF
PLAQUE DE SUBSTRAT POUR GAZONNAGE DE TOIT ET PROCÉDÉ DE GAZONNAGE DE TOIT

(30) Priorität: 01.04.2022 DE 202022101758 U
(43) Veröffentlichungstag der Anmeldung: 04.10.2023
(73) Patentinhaber: Delker, Matthias, 33397 Rietberg (DE)
(72) Erfinder: Delker, Matthias, 33397 Rietberg (DE)
(74) Vertreter: Bauer, Dirk

(56) Entgegenhaltungen:
- EP-B1- 1 090 176
- EP-B1- 2 963 167
- DE-A1- 102014 115 138
- DE-C2- 19 648 105

## Beschreibung

Die vorliegende Anmeldung betrifft eine Substratplatte für eine Dachbegrünung gemäß dem Oberbegriff von Anspruch 1. Sie ist von nachwachsenden Rohstoffen gebildet.

Bei "nachwachsenden Rohstoffen" handelt es sich im Sinne der vorliegenden Anmeldung um organische Rohstoffe, die aus landwirtschaftlicher, forstwirtschaftlicher und Fischerei-Produktion stammen und vom Menschen zielgerichtet für weiterführende Anwendungszwecke außerhalb des Nahrungs- und Futterbereiches verwendet werden. Für die Bildung einer Substratplatte können zumindest anteilig als nachwachsende Rohstoffe insbesondere Naturfasern wie beispielsweise Flachsfasern oder Hanffasern zum Einsatz kommen.

### Stand der Technik

Dachbegrünungen kommen insbesondere auf Flachdächern zum Einsatz. Hierzu wird typischerweise auf dem jeweiligen Dach eine Substratschüttung aufgebracht, die typischerweise von künstlichen Materialien wie Perliten, Blähton, Styropor; Lava oder Bims gebildet ist. Diese Schüttung bildet das Substrat für die gewünschte Dachbegrünung. Die Pflanzen, mit denen das Dach begrünt werden soll, werden schließlich beispielsweise in Form einer Sedummatte auf das Substrat aufgebracht und gegebenenfalls mit Dünger versorgt. Die beschriebene Vorgehensweise ist insoweit nachteilig, als das Substrat eine vergleichsweise schlechte Klimabilanz aufweist und es ihm mithin an der ökologisch wichtigen Nachhaltigkeit mangelt. Auch ist eine Entsorgung des Substrats bei einem späteren Rückbau aufwendig.

Um diesem Problem zu begegnen, offenbart beispielsweise die deutsche Patentschrift DE 196 48 105 C2 ein Vegetationselement für die Begrünung von Dachflächen. Dieses Vegetationselement umfasst einen Vegetationsträger, der von organischem Material gebildet sein kann. Der Vegetationsträger, der eine Substratmatte darstellt, kann beispielsweise aus Kokos, Flachs, Hanf oder Baumwolle bestehen. Diese Materialien haben gemeinsam, dass sie in der freien Natur verrotten. Von besonderer Bedeutung ist gemäß genannter Schrift die flexible Ausgestaltung des Vegetationsträger, die dazu beiträgt, dass der Vegetationsträger nach dem Prinzip einer flexiblen Matte aufgerollt werden kann.

Für die Verarbeitung von Substrat für eine Dachbegrünung hat es sich als vorteilhaft herausgestellt, wenn dieses vergleichbar zu Wärmedämmplatten verarbeitet werden kann. Hintergrund hierzu ist, dass das Gewerk, das typischerweise die jeweilige Dachbegrünung erstellt, dasselbe ist, dass auch das zugehörige Dach errichtet. Mit anderen Worten werden Dachbegrünungen typischerweise von Dachdeckern erstellt, die im Umgang mit plattenförmigen Materialien deutlich besser vertraut sind als mit Schüttgütern, die typischerweise als Substrat für eine Dachbegrünung verwendet werden.

### Aufgabe

Der vorliegenden Anmeldung liegt mithin die Aufgabe zugrunde, eine Alternative zu schüttfähigem Substrat bereitzustellen, das einfacher verarbeitet werden kann und gleichzeitig besonders nachhaltig ist.

### Lösung

Die zugrunde liegende Aufgabe wird erfindungsgemäß mit den Merkmalen des Anspruchs 1 gelöst. Vorteilhafte Ausgestaltungen ergeben sich aus den zugehörigen Unteransprüchen.

Die erfindungsgemäße Substratplatte ist dadurch gekennzeichnet, dass sie einen Plattenkörper aufweist, der einen Hanfanteil, insbesondere in Form von Hanffasern, in einem Bereich zwischen 40 Massenprozent (nachfolgend "M-%") und 90 M-% einer trockenen Gesamtmasse des Plattenkörpers sowie einen Flachsanteil, insbesondere in Form von Flachsfasern, in einem Bereich zwischen 1 M-% und M-40 % der trockenen Gesamtmasse des Plattenkörpers aufweist. Weiterhin ist vorgesehen, dass der Hanfanteil und/oder der Flachsanteil Schäben enthält bzw. enthalten. Diese können insbesondere von Hanfschäben und/oder Flachsschäben gebildet sein. Bevorzugt beträgt ein Anteil der Schäben an dem Hanfanteil bzw. dem Flachsanteil zwischen 40 M-% und 80 M-%, vorzugsweise zwischen 50 M-% und 60 M-%, jeweils bezogen auf die trockene Masse des jeweiligen Anteils. Als Schäben werden gebrochene, holzähnliche Teilchen bezeichnet, die bei der Erzeugung vor allem von Flachsfasern oder Hanffasern im maschinellen Prozess der Entholzung des Pflanzenstängels anfallen. Als weitere Bestandteile kann der Plattenkörper weitere Fasern auch nachwachsenden Rohstoffe, insbesondere Pflanzenfasern wie beispielsweise Holzfasern und/oder Kokosfasern, aufweisen. Beispielsweise ist eine Zusammensetzung denkbar, bei der der Plattenkörper einen Hanfanteil von 50 M-%, einen Flachsanteil von 20 M-% aufweist. Des Weiteren weist dieser Plattenkörper einen Holzanteil in Form von Holzfasern von 20 M-% und einen Kokosanteil in Form von Kokosfasern von 10 M-% auf.

Die erfindungsgemäße Substratplatte hat viele Vorteile. Zum einen ist sie zumindest nahezu vollständig oder vollständig von nachwachsenden Rohstoffen gebildet, die der freien Witterung ausgesetzt mit der Zeit verrotten. Auf diese Weise ist die Substratplatte besonders gut dazu geeignet, Kohlendioxid zu binden und auf diese Weise eine zumindest temporäre Senke für Kohlendioxid zu bilden. Insbesondere kann die erfindungsgemäße Substratplatte mindestens 1,5 kg Kohlendioxid pro Quadratmeter der von ihr belegten (Dach-)Fläche, vorzugsweise mindestens 2,0 kg CO₂/m², binden. Weiterhin ist der Vorteil gegeben, dass bei einem eventuellen Rückbau des jeweiligen Dachs die Dachbegrünung vollständig biologisch abbaubar ist und beispielsweise kompostiert werden kann. Eine gesonderte Entsorgung eines zuvor aufgebrachten Schüttguts, wie es der Stand der Technik in aller Regel vorsieht, entfällt entsprechend. Die Substratplatte ist entsprechend besonders nachhaltig und ökologisch wertvoll.

Im Übrigen ist der erfindungsgemäße Aufbau des Plattenkörpers der Substratplatte im Hinblick auf deren physikalischen Eigenschaften besonders vorteilhaft. Somit ist die Substratplatte besonders hydrophil und hierdurch besonders gut dazu geeignet, Wasser aufzunehmen und über lange Zeit zu speichern. Diese Eigenschaft ist für die Versorgung von Pflanzen mit Wasser besonders vorteilhaft, sodass die Substratplatte auch in Gegenwart längerer Trockenphasen dazu geeignet ist, auf ihr wachsende Pflanzen mit Wasser zu versorgen. Weiterhin tragen in besonders vorteilhafter Weise die genannten Schäben dazu bei, dass die Substratplatte insgesamt eine steife Struktur erhält. Als solche ist sie nicht rollbar, sondern weist eine Eigensteifigkeit auf, die eine Verarbeitung als selbsttragende Platte ermöglicht. Insbesondere kann eine Vielzahl einzelner Substratplatten, die erfindungsgemäß aufgebaut sind, palettenweise gelagert und zu einer Baustelle geliefert werden, wobei die einzelnen Substratplatten besonders einfach auf einem jeweiligen Dach oder einer sonstigen Fläche, die unter Zuhilfenahme der Substratplatten begrünt werden soll, aneinandergelegt werden können.

Insbesondere gegenüber im Stand der Technik üblichen Schüttgütern ist weiterhin als Vorteil anzusehen, dass die erfindungsgemäße Substratplatte vollständig gebunden ist, das heißt frei von auswaschbaren Feinanteilen ist. Bei geschütteten Substraten ist typischerweise auf einem jeweiligen Dach eine sog. "Kiesfangleiste" anzubringen, damit infolge Bewitterung ausgewaschener Kies aufgefangen wird. Noch feinere, sandige Bestandteile gelangen überdies in die Abflusskanäle und können zu unerwünschten Ablagerungen führen. Diese Probleme sind mittels der erfindungsgemäßen Substratplatte vermieden.

Ein weiterer Vorteil der erfindungsgemäßen Substratplatte ist darin zusehen, dass diese eine gleichmäßige Fläche für eine Dachbegrünung bereitstellt. Somit kann besonders einfach eine Vielzahl mehrerer Substratplatten hergestellt werden, die aneinandergelegt werden, woraufhin die dadurch gebildete "Substratschicht" eine konstante Aufbaustärke aufweist. Schwankende Aufbaustärken, die bei geschüttetem Substrat auftreten können, entfallen entsprechend. Außerdem unterliegt die Substratplatte keinen Erosionserscheinungen, beispielsweise infolge Windbelastung. Schließlich trägt die Homogenität der Substratplatte dazu bei, dass die Speicherfähigkeit der gebildeten Substratschicht über die gesamte Fläche, beispielsweise eines Dachs, zumindest im Wesentlichen gleich ist. Die Pflanzen werden sich mithin voraussichtlich über die gesamte Fläche gleich gut entwickeln können und hierdurch einer Gleichmäßigkeit der Begrünung erzielen.

Die Substratplatte kann bevorzugt eine Länge im einem Bereich zwischen 80 cm und 200 cm, vorzugsweise zwischen 100 cm und 150 cm, aufweisen. Ferner ist es vorteilhaft, wenn eine Breite der Substratplatte in einem Bereich zwischen 30 cm und 100 cm, vorzugsweise zwischen 50 cm und 80 cm, liegt. Eine Dicke einer erfindungsgemäßen Substratplatte liegt bevorzugt in einem Bereich zwischen 2 cm und 12 cm, vorzugsweise zwischen 3 cm und 8 cm, weiter vorzugsweise zwischen 4 cm und 5 cm. Substratplatten mit derartigen Abmessungen haben sich als besonders gut verarbeitbar herausgestellt.

In einer besonders vorteilhaften Weiterbildung beträgt der Hanfanteil des Plattenkörpers zwischen 50 M-% und 80 M-% an der Gesamtmasse des Plattenkörpers. Dies ist für die Fähigkeit der Substratplatte zur Aufnahme und Speicherung von Wasser ebenso vorteilhaft wie für die Stabilität bzw. Steifigkeit der Substratplatte. Weiterhin kann eine solche Ausgestaltung von Vorteil sein, bei der der Flachsanteil in einem Bereich zwischen 1 M-% und 30 M-% bezogen auf die Gesamtmasse des Plattenkörpers liegt.

In einer besonders vorteilhaften Ausgestaltung der erfindungsgemäßen Substratplatte liegt ein Anteil der Schäben an dem Hanfanteil bzw. dem Flachsanteil in einem Bereich zwischen 40 M-% und 80 M-%, vorzugsweise zwischen 50 M-% und 60 M-%. Diese Ausgestaltung hat sich als besonders vorteilhaft herausgestellt, um eine hohe Steifigkeit der Substratplatte zu erreichen ohne gleichzeitig auf einen zu großen Anteil der übrigen Faserbestandteile des Hanfs und/oder des Flachs zu verzichten, die typischerweise für die hydrophilen Eigenschaften der Substratplatte verantwortlich sind und zudem die Schäben untereinander verbinden und insoweit als Matrix des Plattenkörpers wirken. Betreffend die Ausgestaltung der Schäben ist es weiterhin besonders von Vorteil, wenn diese eine Faserlänge im Bereich zwischen 1 mm und 50 mm, vorzugsweise zwischen 5 mm und 15 mm, aufweisen.

Weiterhin kann es besonders von Vorteil sein, wenn Flachsfasern des Flachsanteils einen Durchmesser im Bereich zwischen 1 mm und 3 mm aufweisen. Überdies ist es von Vorteil, wenn die Flachsfasern eine Faserlänge im Bereich zwischen 50 mm und 150 mm aufweisen. Betreffend Hanffasern des Hanfanteils ist es von Vorteil, wenn diese eine Faserlänge im Bereich zwischen 50 mm und 150 mm und unabhängig davon oder in Kombination hiermit einen Durchmesser im Bereich zwischen 5 mm und 15 mm aufweisen. Die genannten Bereiche haben sich jeweils für sich allein betrachtet, insbesondere jedoch in Kombination miteinander als besonders vorteilhaft für die Eigenschaften der Substratplatte herausgestellt.

Die erfindungsgemäße Substratplatte weiter ausgestaltend weist der Plattenkörper eine Dichte von höchstens 200 kg/m³, vorzugsweise höchstens 150 kg/m³, weiter vorzugsweise höchstens 100 kg/m³, auf. Substratplatten mit einer solchen Ausgestaltung sind besonders gut zu verarbeiten und bieten überdies ein hohes inneres Freivolumen, in dem Wasser aufgenommen und gespeichert werden kann. Insbesondere kann die erfindungsgemäße Substratplatte bevorzugt mindestens 0,5 kg Wasser pro kg Eigengewicht (trocken), vorzugsweise mindestens 0,6 kg Wasser pro kg Eigengewicht (trocken), weiter vorzugsweise mindestens 0,7 kg Wasser pro kg Eigengewicht (trocken) aufnehmen und binden.

Besonders vorteilhaft ist des Weiteren eine solche Substratplatte, die Mineraldünger umfasst, der an einer Oberfläche des Plattenkörpers und/oder innerhalb des Plattenkörpers verteilt ist. Der Mineraldünger es besonders von Vorteil, um Pflanzen, denen die Substratplatte als Träger dient, Nährstoffe zur Verfügung zu stellen und hierdurch deren Wachstum zu unterstützen. Der Mineraldünger kann entweder bereits bei der Herstellung der Substratplatte in den Plattenkörper eingearbeitet werden oder auf die Oberfläche des Plattenkörpers aufgetragen werden. Letzteres kann insbesondere nachträglich nach Fertigstellung des Plattenkörpers erfolgen.

Die zugrunde liegende Aufgabe wird ferner erfindungsgemäß mittels eines Verfahrens gelöst. Dieses Verfahren sieht vor, dass eine Mehrzahl von erfindungsgemäßen Substratplatten unmittelbar auf eine Dachfläche aufgelegt werden, wobei die Substratplatten unmittelbar aneinander angrenzen. Die Substratplatten bilden daraufhin gemeinsam eine geschlossene Fläche auf der jeweiligen Dachfläche. Sodann werden Pflanzen oder Pflanzensamen unmittelbar auf zumindest einen Teil der Substratplatten aufgebracht. Vorzugsweise werden die Substratplatten vollflächig mit den Pflanzen oder Pflanzensamen bedeckt. Hierbei kann es besonders von Vorteil sein, wenn Pflanzensamen auf die Substratplatten aufgespritzt werden. Dieses Verfahren ist besonders einfach und zügig durchzuführen, wodurch auch größere Flächen zügig begrünt werden können. Ebenfalls ist es denkbar, bereits vorgezogene Sedummatten auf die Substratplatten aufzubringen, insbesondere auf diesen auszurollen. Derartige Sedummatten umfassen bereits teilentwickelte Pflanzen, die mit ihrem Wurzelwerk auf die Substratplatten aufgebracht werden, sodass die Pflanzen sich auf und mithilfe der Substratplatten weiter entwickeln können.

In einer weiterhin vorteilhaften Ausgestaltung weist der Plattenkörper eine inhomogene Struktur auf. Dies hat den Vorteil, dass Pflanzen, die auf dem Plattenkörper wachsen, besonders einfach in dem Plattenkörper wurzeln können, da für die Wurzeln Bereiche geringer Dichte bzw. geringer Festigkeit bereitstehen, in denen sie sich besonders gut fortsetzen können. Andere Bereiche größerer Dichte bzw. größerer Festigkeit, die beispielsweise durch die Schäben bedingt sind, können die Wurzeln hingegen meiden.

Schließlich kann eine solche Substratplatte besonders vorteilhaft sein, die mindestens eine helle Oberfläche aufweist, vorzugsweise in einem weißen oder beigen Farbton. Diese Ausgestaltung hat den Vorteil, dass sich der Plattenkörper infolge Sonnenbestrahlung nicht so stark aufheizt, wie dies von den typischerweise dunklen Substratschüttungen des Standes der Technik bekannt ist. Hierdurch wird verhindert, dass eine Oberflächentemperatur des Plattenkörpers zu stark ansteigt, wodurch wiederum das Pflanzenwachstum begünstigt ist. Des Weiteren wird die Verdunstung von Wasser reduziert.

### Ausführungsbeispiele

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße Substratplatte,
- Fig. 2:: Eine perspektivische Ansicht der Substratplatte gemäß Figur 1.

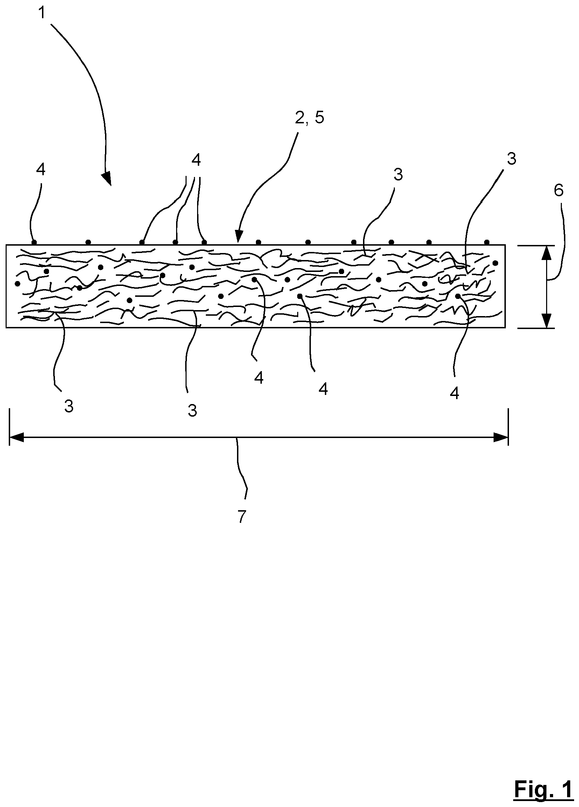

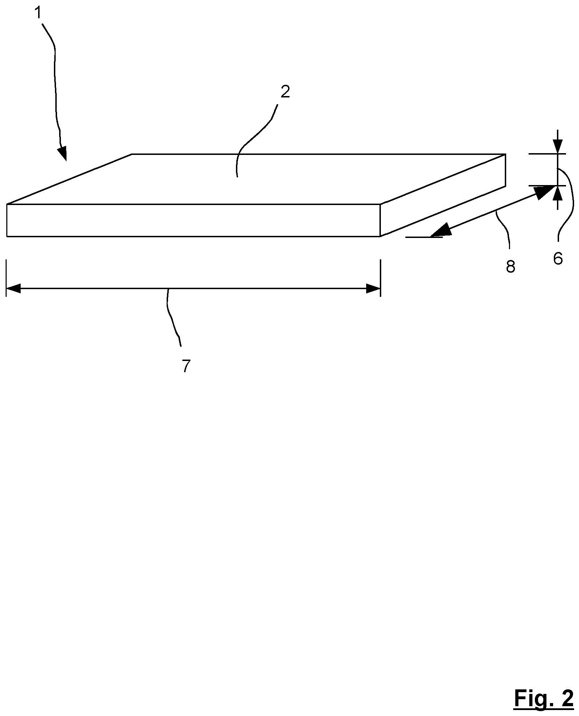

Ein Ausführungsbeispiel, das in den **Figuren 1** **und** **2** dargestellt ist, umfasst eine erfindungsgemäße Substratplatte **1,** die einen Plattenkörper **2** umfasst. Dieser ist von nachwachsenden Rohstoffen gebildet, wobei der Plattenkörper **2** in dem gezeigten Beispiel einen von Hanffasern gebildeten Hanfanteil von 80 M-% und einen von Flachsfasern gebildeten Flachsanteil von 20 M-% (jeweils bezogen auf eine trockene Gesamtmasse des Plattenkörpers **2**) aufweist. Ferner ist der Plattenkörper **2** derart ausgebildet, dass der Hanfanteil Schäben **3** enthält, wobei die Schäben **3** hier ca. 50 M-% des Hanfanteils (bezogen auf dessen Gesamtmasse) des Plattenkörpers **2** ausmachen. Die Schäben **3** weisen in dem gezeigten Beispiel eine Faserlänge im Bereich zwischen 10 mm und 30 mm auf. Sie sind primär für die steife Struktur der Substratplatte **1** verantwortlich, da die Schäben **3** eine steife, holzartige Struktur aufweisen und auf diese Weise dafür sorgen, dass der Plattenkörper **2** eigenstabil ausgebildet ist. Dies bedeutet, dass der Plattenkörper **2** bei einer punktuellen Lagerung an beispielsweise zwei Lagerstellen zumindest im Wesentlichen seine plattenförmige Form beibehält und insbesondere nicht vergleichbar zu einer weichen Matte in sich zusammenfällt. Diese Eigenschaften ermöglichen es, dass die Substratplatte **1** nach Art einer steifen Platte einzeln stückweise verlegt werden kann, wodurch die Bildung einer zusammenhängenden Fläche, die von einer Mehrzahl von einzelnen Substratplatten **1** gebildet ist, besonders einfach fällt.

In besonders bevorzugter Weise weisen die Hanffasern des Hanfanteils des gezeigten Plattenkörpers **2** jeweils einen Durchmesser im Bereich zwischen 5 mm und 15 mm auf. Der Durchmesser der Flachsfasern des Flachsanteils bewegt sich indes im Bereich zwischen 1 mm und 3 mm. Die Hanffasern des Hanfanteils weisen in dem gezeigten Beispiel jeweils eine Faserlänge im Bereich zwischen 50 mm und 100 mm auf. Dasselbe gilt für die Flachsfasern des Flachsanteils. Der Plattenkörper **2** weist hier eine Dichte von ca. 90 kg/m³ auf und ist mithin besonders leicht verarbeitbar. Insbesondere können bei dieser Dichte die einzelnen Substratplatten **1** mit vergleichsweise großen Abmessungen hergestellt werden, ohne dass hierdurch die Verarbeitung der Substratplatten **1** erschwert wird. In dem gezeigten Beispiel weist der Plattenkörper **2.** Substratplatte **1** eine Dicke **6** von 5 cm, eine Länge **7** von 120 cm und eine Breite **8** von 60 cm auf. Mithin beträgt das Volumen des Plattenkörpers **2** in dem gezeigten Beispiel 0,036 m³, sodass der Plattenkörper **2** insgesamt eine Masse von weniger als 3,5 kg aufweist.

In besonders bevorzugter Weise umfasst die Substratplatte **1** Mineraldünger **4,** der in Form einzelner Partikel sowohl auf eine Oberfläche **5** des Plattenkörpers **2** aufgetragen als auch innerhalb des Plattenkörpers **2** verteilt ist. Der Mineraldünger **4** ist besonders gut dazu geeignet, Pflanzen, die auf der Substratplatte **1** kultiviert werden, als Nährstoffquelle zu dienen.

Die Oberfläche **5** des Plattenkörpers **2** ist bei der gezeigten Substratplatte **1** in einem hellbeigen Farbton ausgebildet, wodurch eine Aufheizung der Oberfläche **5** bei einfallender Sonnenstrahlung vergleichsweise gering ausfällt.

### Bezugszeichenliste

- 1: Substratplatte
- 2: Plattenkörper
- 3: Schäbe
- 4: Mineraldünger
- 5: Oberfläche
- 6: Dicke
- 7: Länge
- 8: Breite

## Patentansprüche

1. Substratplatte (1) für eine Dachbegrünung, die von nachwachsenden Rohstoffen gebildet ist,
**dadurch gekennzeichnet, dass**
ein Plattenkörper (2) der Substratplatte (1) bezogen auf seine Gesamtmasse einen Hanfanteil in einem Bereich zwischen 40 M-% und 90 M-% sowie einen Flachsanteil in einem Bereich zwischen 1 M-% und 40 M-% aufweist,
wobei der Hanfanteil und/oder der Flachsanteil Schäben (3) enthält,
wobei die Schäben (3) dazu beitragen, dass die Substratplatte (1) insgesamt eine steife Struktur erhält und als solche nicht rollbar ist, sondern eine Eigensteifigkeit aufweist, die eine Verarbeitung als selbsttragende Platte ermöglicht.

2. Substratplatte (1) nach Anspruch 1, **dadurch gekennzeichnet, dass** der Hanfanteil in einem Bereich zwischen 50 M-% und 80 M-% liegt.

3. Substratplatte (1) nach einem der vorhergehenden Ansprüche, **dadurch gekennzeichnet, dass** der Flachsanteil in einem Bereich zwischen 1 M-% und 30 M-% liegt.

4. Substratplatte (1) nach einem der vorhergehenden Ansprüche, **dadurch gekennzeichnet, dass** ein Anteil der Schäben (3) an dem Hanfanteil und/oder dem Flachsanteil in einem Bereich zwischen 40 M-% und 80 M-%, vorzugsweise zwischen 50 M-% und 60 M-%, liegt.

5. Substratplatte (1) nach einem der vorhergehenden Ansprüche, **dadurch gekennzeichnet, dass** die Schäben (3) eine Faserlänge im Bereich zwischen 1 mm und 50 mm, vorzugsweise zwischen 5 mm und 30 mm, aufweisen.

6. Substratplatte (1) nach einem der vorhergehenden Ansprüche, **dadurch gekennzeichnet, dass** Hanffasern des Hanfanteils einen Durchmesser im Bereich zwischen 5 mm und 15 mm aufweisen.

7. Substratplatte (1) nach einem der vorhergehenden Ansprüche, **dadurch gekennzeichnet, dass** Flachsfasern des Flachsanteils einen Durchmesser im Bereich zwischen 1 mm und 3 mm aufweisen.

8. Substratplatte (1) nach einem der vorhergehenden Ansprüche, **dadurch gekennzeichnet, dass** Hanffasern des Hanfanteils eine Faserlänge im Bereich zwischen 50 mm und 150 mm aufweisen.

9. Substratplatte (1) nach einem der vorhergehenden Ansprüche, **dadurch gekennzeichnet, dass** Flachsfasern des Flachsanteils eine Faserlänge im Bereich zwischen 50 mm und 150 mm aufweisen.

10. Substratplatte (1) nach einem der vorhergehenden Ansprüche, **dadurch gekennzeichnet, dass** der Plattenkörper (2) eine Dichte von höchstens 200 kg/m³, vorzugweise höchstens 150 kg/m³, weiter vorzugsweise höchsten 100 kg/m³, aufweist.

11. Substratplatte (1) nach einem der vorhergehenden Ansprüche, **dadurch gekennzeichnet, dass** der Plattenkörper (2) eine Dicke (6) zwischen 2 cm und 12 cm, vorzugsweise zwischen 3 cm und 8 cm, weiter vorzugsweise zwischen 4 cm und 6 cm, aufweist.

12. Substratplatte (1) nach einem der vorhergehenden Ansprüche, **dadurch gekennzeichnet, dass** der Plattenkörper (2) eine Länge (7) im Bereich zwischen 80 cm und 200 cm, vorzugsweise zwischen 100 cm und 150 cm, aufweist.

13. Substratplatte (1) nach einem der vorhergehenden Ansprüche, **dadurch gekennzeichnet, dass** der Plattenkörper (2) eine Breite (8) im Bereich zwischen 30 cm und 90 cm, vorzugsweise zwischen 50 cm und 70 cm, aufweist.

14. Verfahren zur Dachbegrünung, wobei eine Mehrzahl von Substratplatten (1) gemäß einem der vorhergehenden Ansprüche derart unmittelbar auf eine Dachfläche aufgelegt wird, dass die Substratplatten (1) unmittelbar aneinander angrenzen und gemeinsam eine geschlossene Fläche auf der Dachfläche ausbilden.

15. Verfahren nach Anspruch 14, **dadurch gekennzeichnet, dass** Pflanzen oder Pflanzensamen unmittelbar auf zumindest einen Teil der Substratplatten (1) aufgebracht werden und/oder mindestens eine Sedummatte unmittelbar auf zumindest einen Teil der Substratplatten (1) aufgebracht wird.

16. Verwendung einer Substratplatte (1) als Substratplatte für eine Dachbegrünung, wobei die Substratplatte (1) von nachwachsenden Rohstoffen gebildet ist, wobei ein Plattenkörper (2) der Substratplatte (1) bezogen auf seine Gesamtmasse einen Hanfanteil in einem Bereich zwischen 40 M-% und 90 M-% sowie einen Flachsanteil in einem Bereich zwischen 1 M-% und 40 M-% aufweist, wobei der Hanfanteil und/oder der Flachsanteil Schäben (3) enthält, wobei die Schäben (3) dazu beitragen, dass die Substratplatte (1) insgesamt eine steife Struktur erhält und als solche nicht rollbar ist, sondern eine Eigensteifigkeit aufweist, die eine Verarbeitung als selbsttragende Platte ermöglicht.

## Claims

1. A substrate panel (1) for greening a roof, which is formed from renewable raw materials,
**characterized in that**
with respect to its total weight, a panel body (2) of the substrate panel (1) has a hemp fraction in a range between 40 % by weight and 90 % by weight as well as a flax fraction in a range between 1 % by weight and 40 % by weight,
wherein the hemp fraction and/or the flax fraction contains shives (3),
wherein the shives (3) contribute to the substrate panel (1) as a whole obtaining a rigid structure and as such of not being capable of being rolled up, but of having an inherent rigidity which enables it to be manipulated as a self-supporting panel.

2. The substrate panel (1) as claimed in claim 1, **characterized in that** the hemp fraction is in a range between 50 % by weight and 80 % by weight.

3. The substrate panel (1) as claimed in one of the preceding claims, **characterized in that** the flax fraction is in a range between 1 % by weight and 30 % by weight.

4. The substrate panel (1) as claimed in one of the preceding claims, **characterized in that** a fraction of the shives (3) in the hemp fraction and/or in the flax fraction is in a range between 40 % by weight and 80 % by weight, preferably between 50 % by weight and 60 % by weight.

5. The substrate panel (1) as claimed in one of the preceding claims, **characterized in that** the shives (3) have a fibre length in the range between 1 mm and 50 mm, preferably between 5 mm and 30 mm.

6. The substrate panel (1) as claimed in one of the preceding claims, **characterized in that** hemp fibres of the hemp fraction have a diameter in the range between 5 mm and 15 mm.

7. The substrate panel (1) as claimed in one of the preceding claims, **characterized in that** flax fibres of the flax fraction have a diameter in the range between 1 mm and 3 mm.

8. The substrate panel (1) as claimed in one of the preceding claims, **characterized in that** hemp fibres of the hemp fraction have a fibre length in the range between 50 mm and 150 mm.

9. The substrate panel (1) as claimed in one of the preceding claims, **characterized in that** flax fibres of the flax fraction have a fibre length in the range between 50 mm and 150 mm.

10. The substrate panel (1) as claimed in one of the preceding claims, **characterized in that** the panel body (2) has a density of at most 200 kg/m³, preferably at most 150 kg/m³, more preferably at most 100 kg/m³.

11. The substrate panel (1) as claimed in one of the preceding claims, **characterized in that** the panel body (2) has a thickness (6) of between 2 cm and 12 cm, preferably between 3 cm and 8 cm, more preferably between 4 cm and 6 cm.

12. The substrate panel (1) as claimed in one of the preceding claims, **characterized in that** the panel body (2) has a length (7) in the range between 80 cm and 200 cm, preferably between 100 cm and 150 cm.

13. The substrate panel (1) as claimed in one of the preceding claims, **characterized in that** the panel body (2) has a width (8) in the range between 30 cm and 90 cm, preferably between 50 cm and 70 cm.

14. A method for greening a roof, wherein a plurality of substrate panels (1) as claimed in one of the preceding claims are laid directly onto a roof surface in a manner such that the substrate panels (1) directly border each other and together form a cohesive surface on the roof surface.

15. The method as claimed in claim 14, **characterized in that** plants or plant seeds are applied directly to at least a portion of the substrate panels (1) and/or at least one sedum mat is applied directly to at least a portion of the substrate panels (1).

16. Use of a substrate panel (1) as a substrate panel for greening a roof, wherein the substrate panel (1) is formed from renewable raw materials, wherein, with respect to its total weight, a panel body (2) of the substrate panel (1) has a hemp fraction in a range between 40 % by weight and 90 % by weight as well as a flax fraction in a range between 1 % by weight and 40 % by weight, wherein the hemp fraction and/or the flax fraction contains shives (3), wherein the shives (3) contribute to the substrate panel (1) as a whole obtaining a rigid structure and as such of not being capable of being rolled up, but of having an inherent rigidity which enables it to be manipulated as a self-supporting panel.

## Revendications

1. Plaque de substrat (1), destinée à végétaliser une toiture, qui est constituée en matières premières renouvelables,
**caractérisée**
**en ce qu'**un corps de plaque (2) de la plaque de substrat (1) comporte, en rapport à sa masse totale une proportion de chanvre dans un ordre compris entre 40 % en masse et 90 % en masse, ainsi qu'une proportion de lin dans un ordre compris entre 1 % en masse et 40 % en masse,
la proportion de chanvre et / ou la proportion de lin contenant des anas (3),
les anas (3) contribuant à conférer à la plaque de substrat (1) une structure globalement rigide et à ce qu'elle ne soit pas enroulable en tant que telle, mais qu'elle fasse preuve d'une rigidité propre permettant une mise en œuvre en tant que plaque autoportante.

2. Plaque de substrat (1) selon la revendication 1, **caractérisée en ce que** la proportion de chanvre se situe dans un ordre compris entre 50 % en masse et 80 % en masse.

3. Plaque de substrat (1) selon l'une quelconque des revendications précédentes, **caractérisée en ce que** la proportion de lin se situe dans un ordre compris entre 1 % en masse et 30 % en masse.

4. Plaque de substrat (1) selon l'une quelconque des revendications précédentes, **caractérisée en ce qu'**une proportion d'anas (3) en rapport à la proportion de chanvre et / ou à la proportion de lin se situe dans un ordre compris entre 40 % en masse et 80 % en masse, de préférence entre 50 % en masse et 60 % en masse.

5. Plaque de substrat (1) selon l'une quelconque des revendications précédentes, **caractérisée en ce que** les anas (3) présentent une longueur de fibres de l'ordre compris entre 1 mm et 50 mm, de préférence, entre 5 mm et 30 mm.

6. Plaque de substrat (1) selon l'une quelconque des revendications précédentes, **caractérisée en ce que** des fibres de chanvre de la proportion de chanvre présentent un diamètre dans l'ordre compris entre 5 mm et 15 mm.

7. Plaque de substrat (1) selon l'une quelconque des revendications précédentes, **caractérisée en ce que** des fibres de lin de la proportion de lin présentent un diamètre dans l'ordre compris entre 1 mm et 3 mm.

8. Plaque de substrat (1) selon l'une quelconque des revendications précédentes, **caractérisée en ce que** des fibres de chanvre de la proportion de chanvre présentent un diamètre dans l'ordre compris entre 50 mm et 150 mm.

9. Plaque de substrat (1) selon l'une quelconque des revendications précédentes, **caractérisée en ce que** des fibres de lin de la proportion de lin présentent une longueur de fibres dans l'ordre compris entre 50 mm et 150 mm.

10. Plaque de substrat (1) selon l'une quelconque des revendications précédentes, **caractérisée en ce que** le corps de plaque (2) présente une densité d'un maximum de 200 kg/m³, de préférence d'un maximum 150 kg/m³, de manière plus préférentielle, d'un maximum de 100 kg/m³.

11. Plaque de substrat (1) selon l'une quelconque des revendications précédentes, **caractérisée en ce que** le corps de plaque (2) présente une épaisseur (6) comprise entre 2 cm et 12 cm, de préférence comprise entre 3 cm et 8 cm, de manière plus préférentielle, comprise entre 4 cm et 6 cm.

12. Plaque de substrat (1) selon l'une quelconque des revendications précédentes, **caractérisée en ce que** le corps de plaque (2) présente une longueur (7) de l'ordre compris entre 80 cm et 200 cm, de préférence compris entre 100 cm et 150 cm.

13. Plaque de substrat (1) selon l'une quelconque des revendications précédentes, **caractérisée en ce que** le corps de plaque (2) présente une largeur (8) de l'ordre compris entre 30 cm et 90 cm, de préférence compris entre 50 cm et 70 cm.

14. Procédé, destiné à végétaliser une toiture, lors duquel, on pose directement sur une surface d'un toit une pluralité de plaques de substrat (1) selon l'une quelconque des revendications précédentes, de telle sorte que les plaques de substrat (1) soient directement adjacentes les unes aux autres et forment conjointement une surface fermée sur la surface de toit.

15. Procédé selon la revendication 14, **caractérisé en ce que** l'on applique directement sur au moins une partie des plaques de substrat (1) des végétaux ou des semences végétales et / ou l'on applique au moins un tapis de sedum directement sur au moins une partie des plaques de substrat (1).

16. Utilisation d'une plaque de substrat (1) en tant que plaque de substrat destinée à une toiture végétalisée, la plaque de substrat (1) étant constituée de matières premières renouvelables, un corps de plaque (2) de la plaque de substrat (1) comportant, en rapport à sa masse totale une proportion de chanvre dans un ordre compris entre 40 % en masse et 90 % en masse, ainsi qu'une proportion de lin dans un ordre compris entre 1 % en masse et 40 % en masse, la proportion de chanvre et / ou la proportion de lin contenant des anas (3), les anas (3) contribuant à conférer à la plaque de substrat (1) une structure globalement rigide et à ce qu'elle ne soit pas enroulable en tant que telle, mais qu'elle fasse preuve d'une rigidité propre permettant une mise en œuvre en tant que plaque autoportante.
